# FASCICULE DE BREVET EUROPEEN

(11) **EP 1 048 521 B1**
(45) Date de publication et mention de la délivrance du brevet: **28.12.2005**
(21) Numéro de dépôt: 00401057.5
(22) Date de dépôt: 14.04.2000
(51) Int. Cl.: B60Q 1/04

(54) **Dispositif de montage d'un bloc optique sur des éléments de carrosserie d'un véhicule automobile**
Einbau einer optischen Einheit auf Karosserieteile eines Fahrzeugs
Optical block mounting device on vehicle body parts

(30) Priorité: 26.04.1999 FR 9905263
(43) Date de publication de la demande: 02.11.2000
(73) Titulaire: Peugeot Citroen Automobiles SA, 92200 Neuilly sur Seine (FR)
(72) Inventeur: Jamilloux, Olivier, 78540 Vernouillet (FR)
(74) Mandataire: Lanceplaine, Jean-Claude

(56) Documents cités:
- EP-A- 0 604 760
- US-A- 4 070 051
- US-A- 4 345 307
- US-A- 4 644 447

## Description

La présente invention a pour objet un dispositif de montage d'un bloc optique sur des éléments de la carrosserie d'un véhicule automobile, comme par exemple un projecteur.

L'invention concerne également un bloc optique pour véhicule automobile comportant un tel dispositif de montage.

Les blocs optiques pour véhicules automobiles comportent un boîtier dans lequel est monté un réflecteur dont la surface concave réflectrice est dirigée vers une face avant du boîtier qui est fermée par une glace.

Une ou plusieurs lampes sont montées de manière amovible à l'intérieur du réflecteur et le boîtier est relié à la carrosserie du véhicule par des moyens de liaison.

Généralement, ces moyens de liaison sont formés par plusieurs pattes solidaires du boîtier et fixées sur l'élément de carrosserie adjacent par exemple par des organes de vissage.

Dans le cas d'un choc frontal, le bloc optique recule et endommage les éléments du véhicule placés derrière, comme par exemple les éléments de la structure du véhicule ou des accessoires du moteur.

On connaît des dispositifs de montage d'un bloc optique qui autorisent le recul du bloc optique en cas de choc sans qu'il soit endommagé.

Mais ces dispositifs, en cas de choc, augmentent les risques de détérioration des éléments du véhicule placés derrière le bloc optique du fait qu'ils favorisent le recul dudit bloc optique.

On connaît également des dispositifs de fixation d'un bloc optique sur un élément de la structure du véhicule automobile au moyen de pattes fusibles qui, en se rompant sous un choc de force déterminée, empêche le recul de ce bloc optique.

Mais, ces dispositifs ne peuvent absorber sans recul que les chocs de faible intensité, car au delà, ils produisent le même effet que les dispositifs classiques de fixation.

Le document le plus proche est US-A-40 70 051 qui montre un dispositif de montage d'un bloc optique sur des éléments de carrosserie d'un véhicule automobile, du type comportant un boîtier fermé par une glace et des organes de liaison du boîtier avec l'élément de carrosserie adjacent, ledit dispositif comprend des moyens de pivotement du bloc optique autour d'un axe lors d'un choc frontal formés par deux doigts opposés, solidaires du boîtier, l'un des doigts étant disposé à une partie latérale du boîtier et l'autre étant disposé à l'autre partie latérale dudit boîtier et lesdits doigts étant en appui sur l'élément de carrosserie adjacent.

L'invention a pour but de proposer un dispositif de montage d'un bloc optique de conception simple et peu coûteuse qui permet d'éviter les inconvénients précédemment mentionnés et de limiter le coût des réparations en cas de choc frontal d'intensité modérée.

L'invention a donc pour objet un dispositif de montage d'un bloc optique sur des éléments de la carrosserie d'un véhicule automobile, du type comportant un boîtier fermé par une glace et des organes de liaison du boîtier avec l'élément de carrosserie adjacent, caractérisé en ce qu'il comprend des moyens de pivotement du bloc optique autour d'un axe vertical lors d'un choc frontal.

Selon d'autres caractéristiques de l'invention :
- les moyens de pivotement sont formés par deux bras opposés et verticaux, solidaires du boîtier, l'un des doigts étant disposé à la partie supérieure du boîtier et l'autre étant disposé à la partie inférieure dudit boîtier et lesdits doigts étant alignés sur l'axe vertical de pivotement et en appui sur l'élément de carrosserie adjacent,
- l'axe vertical de pivotement du bloc optique est situé sensiblement dans la partie médiane du boîtier,
- chaque doigt est en appui sur l'élément de carrosserie adjacent par une ligne de contact,
- chaque doigt a la forme d'un coin triangulaire dont une arête détermine la ligne de contact, les lignes de contact des deux doigts constituant l'axe vertical de pivotement du bloc optique.

L'invention a également pour objet un bloc optique de véhicule automobile comportant un dispositif de montage tel que mentionné ci-dessus

Les caractéristiques et avantages de l'invention apparaîtront à la lecture de la description qui va suivre, donnée à titre d'exemple et faite en référence aux dessins annexés, sur lesquels :
- la Fig. 1 est une vue schématique en perspective d'une partie de la face avant d'un véhicule automobile comportant un bloc optique équipé d'un dispositif de montage conforme à l'invention,
- la Fig. 2 est une vue schématique en perspective du bloc optique relié aux éléments de la structure du véhicule automobile au moyen du dispositif de montage conforme à l'invention,
- la Fig. 3 est une vue schématique en coupe verticale du bloc optique représenté à la Fig. 2,
- la Fig. 4 est une vue schématique en coupe horizontale du bloc optique représenté à la Fig. 2.

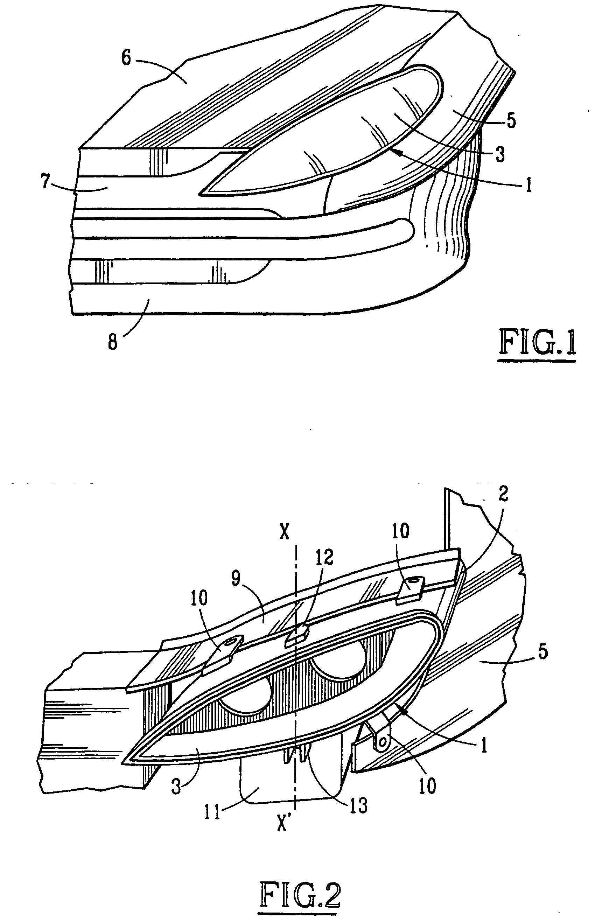

Sur la Fig. 1, on a représenté schématiquement une partie de la face avant d'un véhicule automobile montrant un bloc optique désigné dans son ensemble par la référence 1.

De manière classique, le bloc optique 1 se compose d'un boîtier 2 fermé par une glace 3 et d'un dispositif de montage sur les éléments de carrosserie adjacents, comme on le verra ultérieurement.

Le boîtier 2 réalisé par exemple en matière plastique moulée comporte des parois minces et est ouvert sur sa face avant pour recevoir la glace 3.

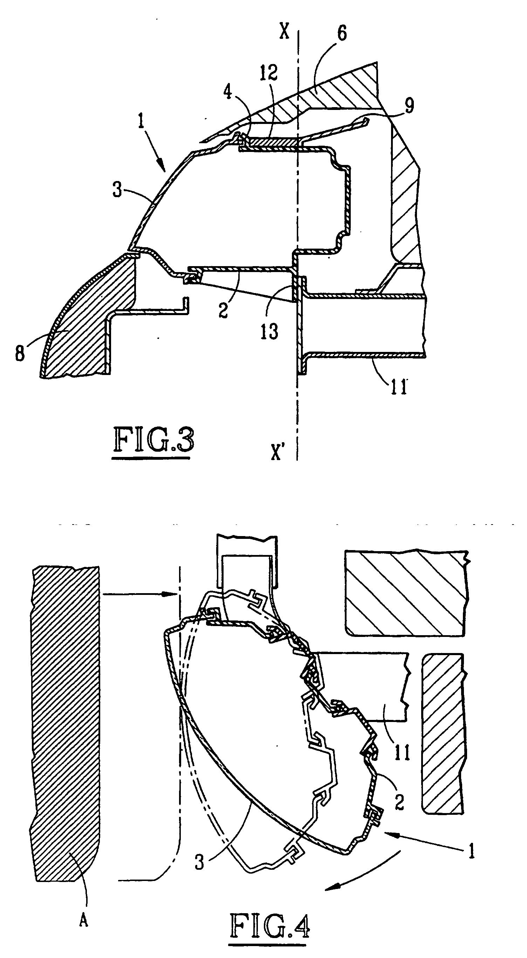

Ainsi que représenté notamment à la Fig. 3, l'extrémité avant ouverte du boîtier 2 porte une gorge périphérique 4 ouverte vers l'avant. La glace 3, réalisée par exemple en verre ou en matière plastique, possède une forme complémentaire de celle du boîtier 2. Son extrémité arrière est adaptée pour s'emboîter dans la gorge 4 du boîtier 2.

Le boîtier 2 est positionné dans une ouverture ménagée dans la carrosserie du véhicule automobile de telle manière que la glace 3 vienne affleurer les éléments de carrosserie adjacents, comme par exemple une aile 5, un capot 6, une calandre 7 disposée au-dessus d'un pare-chocs 8.

Le boîtier 2 du bloc optique 1 est relié aux éléments adjacents de la structure du véhicule automobile par des pattes 10 fixées sur l'élément de carrosserie correspondant au moyen d'organes de vissage, non représentés.

Dans l'exemple de réalisation représenté sur les figures, le boîtier 2 du bloc optique 1 comporte deux pattes supérieures 10 fixées sur une traverse 9 de la façade du véhicule automobile et une patte inférieure 10 fixée sur l'aile 5.

Ces pattes 10 sont dimensionnées pour céder à partir d'un effort déterminé et pour résister aux petits chocs.

Le dispositif de montage du bloc optique 1 sur les éléments de carrosserie comprend des moyens de pivotement de ce bloc optique 1 autour d'un axe vertical XX' lors d'un choc frontal.

Comme représenté notamment sur les Figs. 2 et 3, les moyens de pivotement du bloc optique 1 sont formés par deux doigts, respectivement 12 et 13, opposés et verticaux, solidaires du boîtier 2.

De préférence, l'axe vertical XX' de pivotement du bloc optique 1 est situé sensiblement dans la partie médiane du boîtier 2.

Dans l'exemple de réalisation représenté sur les figures, le doigt 12 est disposé à la partie supérieure du boîtier 2 et le doigt 13 est disposé à la partie inférieure dudit boîtier 2 et ces doigts 12 et 13 sont alignés sur l'axe vertical XX' de pivotement et en appui sur l'élément de carrosserie adjacent.

Par exemple, le doigt supérieur 12 est en appui sur la traverse 9 de la façade du véhicule et le doigt inférieur 13 est en appui sur la face avant d'un longeron 11.

Les doigts 12 et 13 sont en appui sur l'élément de carrosserie adjacent par une ligne de contact et chacun de ces doigts 12 et 13 a la forme d'un coin triangulaire dont une arête détermine la ligne de contact avec cet élément de carrosserie adjacent.

Les lignes de contact ainsi déterminées entre les doigts 12 et 13 et les éléments de carrosserie 9 et 11 constituent l'axe vertical XX' de pivotement du bloc optique 1.

Dans sa position normale, le bloc optique 1 occupe la position représentée en trait plein à la Fig. 4.

Lors d'un choc frontal d'importance modérée avec un obstacle A, les pattes de fixation 10 cèdent et le bloc optique 1 au lieu de reculer en venant en contact avec les éléments du véhicule automobile situés derrière lui, pivote ainsi autour de l'axe vertical XX' grâce à la présence des doigts 12 et 13, jusqu'au moment où sa partie latérale externe vient s'appuyer sur l'aile 5. Le bloc optique 1 occupe la position représentée en traits mixtes à la Figs. 4.

Le pivotement du bloc optique 1 autour de l'axe vertical XX' défini par les doigts 12 et 13 évite d'endommager les éléments du véhicule automobile situé derrière ce bloc optique.

Ainsi, le dispositif de montage selon l'invention qui présente l'avantage d'être d'une conception simple et peu coûteuse, permet de limiter le coût des réparations en cas de choc frontal d'intensité modérée.

## Revendications

1. Dispositif de montage d'un bloc optique (1) sur des éléments de carrosserie d'un véhicule automobile, du type comportant un boîtier (2) fermé par une glace (3) et des organes (10) de liaison du boîtier avec l'élément de carrosserie adjacent, **caractérisé en ce qu'**il comprend des moyens (12, 13) de pivotement du bloc optique (1) autour d'un axe vertical lors d'un choc frontal formés par deux doigts (12, 13) opposés et verticaux, solidaires du boîtier (2), l'un (12) des doigts étant disposé à la partie supérieure du boîtier (2) et l'autre (13) étant disposé à la partie inférieure dudit boîtier (2) et lesdits doigts (12, 13) étant alignés sur l'axe vertical de pivotement et en appui sur l'élément de carrosserie (9, 11) adjacent.

2. Dispositif selon la revendication 1, **caractérisé en ce que** l'axe vertical de pivotement du bloc optique (1) est situé sensiblement dans la partie médiane du boîtier (2).

3. Dispositif selon la revendication 1, **caractérisé en ce que** chaque doigt (12, 13) est en appui sur l'élément de carrosserie (9, 11) adjacent par une ligne de contact.

4. Dispositif selon l'une quelconque des revendications précédentes, **caractérisé en ce que** chaque doigt (12, 13) a la forme d'un coin triangulaire dont une arête détermine la ligne de contact, les lignes de contact des deux doigts (12, 13) constituant l'axe vertical de pivotement du bloc optique (1).

5. Bloc optique de véhicule automobile, **caractérisé en ce qu'**il comporte un dispositif de montage selon l'une quelconque des revendications 1 à 4.

## Patentansprüche

1. Vorrichtung zum Montieren einer optischen Baueinheit (1) an den Bauelementen der Karosserie eines Kraftfahrzeuges mit einem Gehäuse (2), das durch eine Fensterscheibe (3) geschlossen ist, und Elementen (10) zum Verbinden des Gehäuses mit dem benachbarten Karosserieelement, **dadurch gekennzeichnet, dass** sie Einrichtungen (12, 13) zum Schwenken der optischen Baueinheit (1) um eine vertikale Achse bei einem frontalen Stoß aufweist, die aus zwei vertikalen und gegenüberliegenden Fingern (12, 13) gebildet sind, die fest mit dem Gehäuse (2) verbunden sind, wobei einer der Finger (12) am oberen Teil des Gehäuses (2) und der andere (13) am unteren Teil des Gehäuses (2) angeordnet ist und die Finger (12, 13) in einer Linie zur vertikalen Schwenkachse ausgerichtet sind und an dem benachbarten Karosserieelement (9, 10) anliegen.

2. Vorrichtung nach Anspruch 1, **dadurch gekennzeichnet, dass** die vertikale Schwenkachse der optischen Baueinheit (1) sich im Wesentlichen im mittleren Teil des Gehäuses (2) befindet.

3. Vorrichtung nach Anspruch 1, **dadurch gekennzeichnet, dass** jeder Finger (12, 13) am benachbarten Karosserieelement (9, 11) in Form eines Linienkontaktes anliegt.

4. Vorrichtung nach einem der vorhergehenden Ansprüche, **dadurch gekennzeichnet, dass** jeder Finger (12, 13) die Form eines dreiwinkligen Teil hat, dessen Grat den Linienkontakt bildet, wobei die Kontaktlinien der beiden Finger (12, 13) die vertikale Schwenkachse des optischen Baueinheit (1) bilden.

5. Optische Baueinheit für ein Kraftfahrzeug, **dadurch gekennzeichnet, dass** er eine Vorrichtung zum Montieren nach einem der Ansprüche 1 bis 4 aufweist.

## Claims

1. Device for mounting an optical unit (1) on bodywork elements of a motor vehicle, said device being of the type having a casing (2) closed by a glass (3), and components (10) for linking said casing to the adjacent bodywork element, **characterised in that** said device comprises means (12, 13) for pivoting the optical unit (1) about a vertical axis when a frontal impact occurs, which means are formed by two opposed, vertical fingers (12, 13) which are integral with the casing (2), one (12) of said fingers being disposed at the upper part of the casing (2) and the other (13) being disposed at the lower part of the said casing (2) and the said fingers (12, 13) being aligned with the vertical axis of pivoting and resting on the adjacent bodywork element (9, 11).

2. Device according to claim 1, **characterised in that** the vertical axis of pivoting of the optical unit (1) is situated substantially in the median part of the casing (2).

3. Device according to claim 1, **characterised in that** each finger (12, 13) rests on the adjacent bodywork element (9, 11) via a line of contact.

4. Device according to any of the preceding claims, **characterised in that** each finger (12, 13) has the shape of a triangular wedge, one edge of which determines the line of contact, the lines of contact of the two fingers (12, 13) constituting the vertical axis of pivoting of the optical unit (1).

5. Optical unit for a motor vehicle, **characterised in that** it has a mounting device according to any of claims 1 to 4.
